# EUROPEAN PATENT APPLICATION

(11) **EP 1 331 580 A1**
(43) Date of publication of application: **30.07.2003**
(21) Application number: 00970156.6
(22) Date of filing: 27.10.2000
(51) Int. Cl.: G06F 17/50, G06F 17/60

(54) **FACILITY PLAN SUPPORT METHOD, SERVER COMPUTER OF FACILITY PLAN SUPPORT SYSTEM, AND CLIENT COMPUTER OF FACILITY PLAN SUPPORT SYSTEM**

(71) Applicant: MITSUBISHI DENKI KABUSHIKI KAISHA, Tokyo 100-8310 (JP)
(72) Inventor: BOH, Satoru, c/o Mitsubishi Denki K. K., Tokyo 100-8310 (JP); MIYATA, Akira, c/o Mitsubishi Denki K. K., Tokyo 100-8310 (JP); MICHIUE, Hideki, c/o Mitsubishi Denki K. K., Tokyo 100-8310 (JP); TANAKA, Katunori, c/o Mitsubishi Denki K. K., Tokyo 100-8310 (JP); YASUI, Terumasa, c/o Mitsubishi Denki K. K., Tokyo 100-8310 (JP); SHIOTANI, Keiichi, c/o Mitsubishi Denki K. K., Tokyo 100-8310 (JP)
(74) Representative: HOFFMANN - EITLE
(86) International application number: JP0007569
(87) International publication number: WO02037341

(57) **Abstract**

A facility planning supporting method allows a contractor to generate design plan data based on requested specification data generated at a site of a purchaser, and provides the design plan data thus generated to the purchaser via a communications medium. In order to ensure that the correspondence between the requested specification data and the design plan data is readily identifiable and the design plan data and the related requested specification data are easily retrieved for view, the requested specification data and the design plan data generated based on the requested specification data are linked with each other at a site of the contractor such that the requested specification data and the design plan data are viewable one from the other. The requested specification data and the design plan data linked to each other are provided to the purchaser.

## Description

### TECHNICAL FIELD

The present invention relates to a facility planning supporting method for supporting planning activities and quotation designing activities conducted between a purchaser and a contractor prior to the conclusion of a contract for facilities for transformation, reception and distribution of electricity, and also to a server computer and a client computer for a facility planning supporting system.

### BACKGROUND ART

Conventionally, when a facility for transformation, reception and distribution of electricity is planned and a quotation is designed for the facility, a sales representative from a contractor (manufacturer) usually visits a purchaser (customer) to collect requests from the purchaser. A quotation is then designed by a design department of the contractor based on requests from the purchaser. The requests from the purchaser are presented as comments written on sheets of paper or as a report from a sales representative. As a result, the intention of the purchaser is not directly conveyed to a designer of a quotation. The quotation drawn up at first seldom reflects the intention of the purchaser. The sales representative then has to go back and forth between the purchaser and the contractor several times to make corrections to the quotation and the corrected quotation known to each other until a quotation adapted for the intention of the purchaser is finally drawn up.

Thus, according to the quotation design of the related art, a quotation (requested specification) is prepared in the form of a paper document to be presented to the purchaser and the contractor. Accordingly, it is necessary to send the designed quotation to destinations by mail or manually, requiring a long period of time and significant efforts for the quotation to be delivered.

In a field of business outside the electricity facility contract, there is already known a purchase system for acceptance of orders for products adapted for the intention of a purchaser, which system is effortless and not time-consuming. The purchase system known that way is a PC purchase system for ordering personal computers via the Internet. In response to a request from a purchaser, a manufacturer presents a web page presenting specifications (types of CPU, memory, monitor) related to personal computers on sale. The purchaser enters a desired specification and sends it to the manufacturer so that the manufacturer supplies a personal computer built to order to the purchaser.

An order accepting method according to such a system is merely capable of accepting orders via the Internet for products adapted for a requested specification from the purchaser. In designing a quotation for a contract of electricity facility, for example, there are problems that arise from a large volume of data that should be processed. More specifically, correspondence between the specification requested by the purchaser and the quotation designed by the contractor, especially the particulars thereof, is difficult to understand.

In designing a quotation of a contract for electricity facility or the like, drawings such as diagrams showing a configuration of a facility and circuit diagrams are required in addition to a written description of the specification. Merely sending such information via an electronic mail, for example, requires a long period of time for the purchaser or the contractor to access necessary information.

Another disadvantage with the related-art system is that it is difficult to provide a specification involving layouts and connections using a written description.

Since the correspondence between various parts of a quotation designed is usually hard to understand, a response to the requested specification is usually given as a written description without using drawings or the like. Accordingly, a design intent is hard to convey.

### DISCLOSURE OF THE INVENTION

The present invention results from efforts to eliminate the above-mentioned disadvantages and has an objective of a providing a facility planning supporting method capable of designing a quotation in which correspondence between requested specification data describing a specification requested by a purchaser and design plan data generated by a contractor based on the requested specification data is easily identified and the design plan data corresponding to the requested specification data is easily viewed, additional objects being to provide a server computer and a client computer for a facility planning supporting system in which such a method is implemented.

The present invention further has an objective of providing a facility planning supporting method capable of using drawings containing two-dimensional information and three-dimensional information and circuit diagrams containing topological relationship to construct the requested specification data, linking the drawings and the diagrams into various information, and sending the drawings, diagrams and information to a site of a contractor, additional objects being to provide a server computer and a client computer for a facility planning supporting system in which such a method is implemented.

The present invention provides a facility planning supporting method in which a contractor generates design plan data based on requested specification data generated by a purchaser and provides the design plan data thus generated to the purchaser via a communications medium, comprising the steps of: providing, at a site of the contractor, links between the design plan data and the requested specification data so that the design plan data and the requested specification data are viewable one from the other; providing, at the site of the contractor, the design plan data and the requested specification data thus linked with each other to the purchaser; viewing, at a site of the purchaser, the requested specification data and the design plan data linked with each other by the contractor so that the design plan data and the requested specification data are viewable one from the other; and sending, from the site of the purchaser, order data to the contractor based on the requested specification data and the design plan data.

The requested specification data including character data, drawing data and circuit data may be sent from the site of the purchaser to the contractor.

The requested specification data may be data entered in an entry form sent from the purchaser to the contractor. The requested specification entry form may be adapted for a past project similar to a current project or adapted for the purchaser.

The contractor may send to the purchaser a requested specification data entry tool that allows character data, drawing data and circuit data to be entered in the requested specification form.

The requested specification entry tool may display an entry form screen presenting reference data linked with the entry form so that desired data selected from the reference data is entered. Technical calculations, necessary table searches, or selections of components for building the facility for fixing an item of specification may be performed, based on the reference data so that a result of the technical calculations, the table search and the selection is included in the requested specification data.

When mark-up data for highlighting a first object is included in the requested specification data, mark-up data may also be attached to a second object in the corresponding design plan data linked with the first object.

The requested specification data may include information defined to correspond to predetermined data so that the design plan data is generated based on the information.

The present invention also provides a server computer for a facility planning supporting system for generating, at a site of a purchaser, design plan data based on requested specification data, and providing the design plan data thus generated to a purchaser via a communications medium, comprising: requested specification data acknowledging means acknowledging and storing requested specification data sent from a purchaser; designing means generating a design plan based on the requested specification data; design data linking means linking the design plan and the requested specification data with each other so that the requested specification data and the design data are viewable one from the other; and response data providing means providing the requested specification data and the design plan data linked to each other to the purchaser.

The present invention also provides a client computer for a facility planning supporting system for generating requested specification data and sending the requested specification data to a contractor, viewing design plan data generated at a site of the contractor based on the requested specification data, and placing an order with the contractor, comprising: requested specification data generating means generating the requested specification data sending the requested specification data to a purchaser; viewing means receiving the design plan data and the requested specification data linked with each other such that the design plan data and the requested specification data are viewable one from the other; and order placing means sending order data to the contractor based on the requested specification data and the design plan data viewed using the viewing means.

### BRIEF DESCRIPTION OF THE DRAWINGS

Fig. 1 is a block diagram showing an overall construction of a facility planning supporting system according to a first embodiment of the present invention.
Fig. 2 is a flowchart showing an operation of the facility planning supporting system shown in Fig. 1.
Figs. 3 through 7 are diagrams showing a screen showing data displayed in reply according to the first embodiment.
Fig. 8 is a block diagram showing an overall construction of a facility planning supporting system according to a second embodiment of the present invention.
Fig. 9 is a diagram showing an example of a requested specification entry form according to the second embodiment.
Fig. 10 shows an example of a screen in which predetermined data (requested specification data) is entered in the requested specification entry form of Fig. 9.
Fig. 11 shows contents of a file attached to the requested specification entry form of Fig. 10.
Fig. 12 is a flowchart showing an operation of the facility planning supporting system shown in Fig. 8.
Fig. 13 is a block diagram showing an overall construction of a facility planning supporting system according to a third embodiment of the present invention.
Fig. 14 is a block diagram showing details of a requested specification data generating means of Fig. 13.
Fig. 15 is a block diagram showing an overall construction of a facility planning supporting system according to a fourth embodiment of the present invention.
Fig. 16 is a block diagram showing a requested specification entry tool sending means of Fig. 15.
Fig. 17 is a block diagram showing details of a requested specification data generating means of Fig. 15.
Figs. 18 and 19 are flowcharts showing a facility planning supporting method according to a sixth embodiment of the present invention.
Fig. 20 is a flowchart showing an operation of the requested specification entry form according to a seventh embodiment of the present invention.
Fig. 21 shows a screen in which a circuit diagram as work data is displayed.
Fig. 22 shows a screen in which reference data linked with the work data is displayed.
Fig. 23 shows analysis results given as a result of analysis based on the reference data.
Fig. 24 shows a client computer for a facility planning supporting system according to an eighth embodiment of the present invention.
Fig. 25 shows a screen displaying a set of evaluative values for respective design plans.
Fig. 26 shows a screen displaying a plurality of design plans with differences being highlighted.
Fig. 27 is a block diagram showing an overall construction of a facility planning supporting system according to the eighth embodiment.

### BEST MODE OF CARRYING OUT THE INVENTION

A detailed description of the present invention will now be given with reference to the accompanying drawings.

### First embodiment

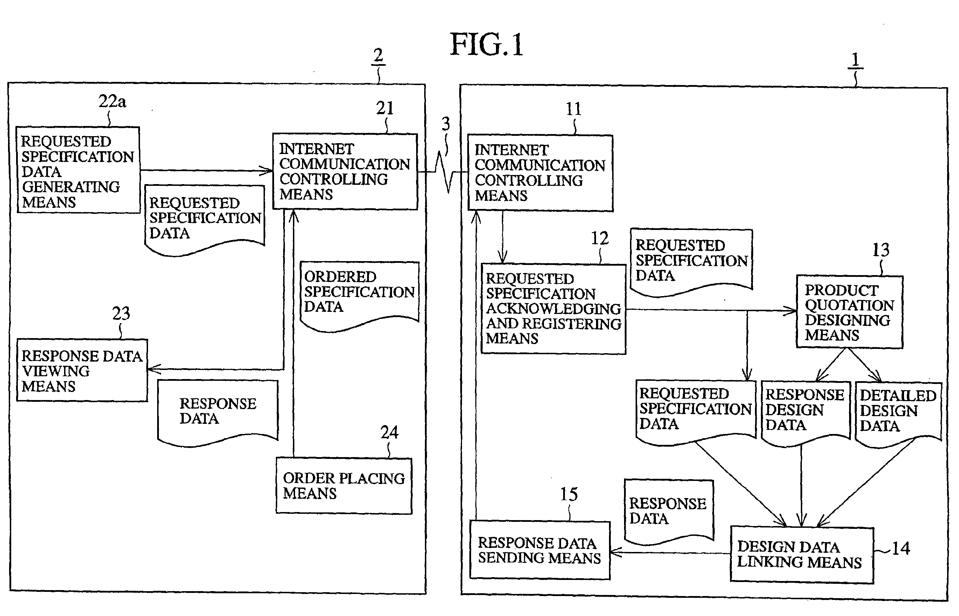

Fig. 1 is a block diagram showing an overall construction of a facility planning supporting system according to a first embodiment of the present invention. As shown in Fig. 1, the facility planning supporting system according to the first embodiment comprises a server computer 1 provided at a site of a party accepting orders such as a manufacturer, a client computer 2 provided at a site of a purchaser such as a customer, and a communications medium 3 such as the Internet connecting the server computer 1 and the client computer 3.

The server computer 1 comprises an Internet communication controlling means 11 for control of communication via the Internet 3, a requested specification acknowledging and registering means 12 for acknowledging and registering requested specification data sent from the purchaser, a product quotation designing means 13 for designing a product quotation based on the requested specification data acknowledged by the requested specification acknowledging and registering means 12 and generating design plan data (response design data, detailed design data) corresponding to the requested specification data, a design data linking means 14 for linking the requested specification data, the response design data and the detailed design data with each other so as to generate response data, and a response data sending means 15 for sending the response data to the purchaser via the Internet 3. The server computer 1 provides capabilities of acknowledging the requested specification from the purchaser via a wide-area network such as the Internet, designing a product and returning results of designing activities to the purchaser via the network.

The requested specification is data describing a specification related to the design and prepared by the purchaser. For example the requested specification data may include data describing the rating of the facility, the system used, product identification, performance and the like, using numerals and codes. Alternatively, the requested specification data may include plan views of premises or buildings in which the facility is being planned, circuit diagrams representing electric circuits of the facility, or a list of load facilities planned to be covered by the facility.

The response design data is data for implementation specification corresponding to the requested specification data. For example, the response data may include a list of constituent equipment and components, CAD data for product appearance and layout etc., and price quotation data.

The detailed design data is more detailed than the response design data. For example, the detailed design data includes detailed CAD data such as part drawings prepared in the process of designing, output data for technical calculations and analysis using simulations, and data describing locations of alternatives and improvement plans.

The design data linking means 14 links predetermined data constituting the requested specification data with predetermined data constituting the response design data, and also links predetermined data constituting the response design data with predetermined data constituting the detailed design data. With this linking, it is possible to refer to data contained in the response design data that corresponds to the predetermined data constituting the requested specification data. To review further details, it is possible to refer to data contained in the detailed design data corresponding to the response design data. It is assumed in the above that the linked relationship is effective between the requested specification data and the response design data, and between the response design data and the detailed design data. Alternatively, predetermined data in the requested specification data may be linked with predetermined data in the detailed design data so that it is possible to refer to data contained in the detailed design data directly, based on the requested specification data.

The client computer 2 comprises an Internet communication controlling means 21 for control of communication via the Internet 3, a requested specification generating means 22 generating the requested specification, a response data viewing means 23 for viewing the response data sent from the contractor, and an order placing means 24 for placing an order based on the response data. The computer 2 provides capabilities for entry of requested specification of a product, review of a design plan provided by the manufacturer in reply, and placement of a final order for the product, by operating in cooperation with the server computer 1.

The server computer 1 is implemented as a web server operating on the HTTP protocol. The Internet communication control means 11 is implemented as an internal feature of the web server. The requested specification acknowledging and registering means 12, the product quotation designing means 13, the design data linking means 14, and the response data sending means 15 are implemented as auxiliary programs timely activated by the web server.

The client computer 2 is implemented as a web browser. The Internet communication controlling means 21 is implemented as an internal feature of the browser. The requested specification data generating means 22, the response data viewing means 23, and the order placing means 24 are implemented as applets and CGI contents operating on the browser.

The communications medium 3 could be any medium as long as it is capable of providing communication between the server computer 1 and the client computer 2. Considering that a larger amount of data such as drawings is carried, a wide-area network may preferably be used.

A description will now be given of the operation according to the facility planning supporting method according to the first embodiment.

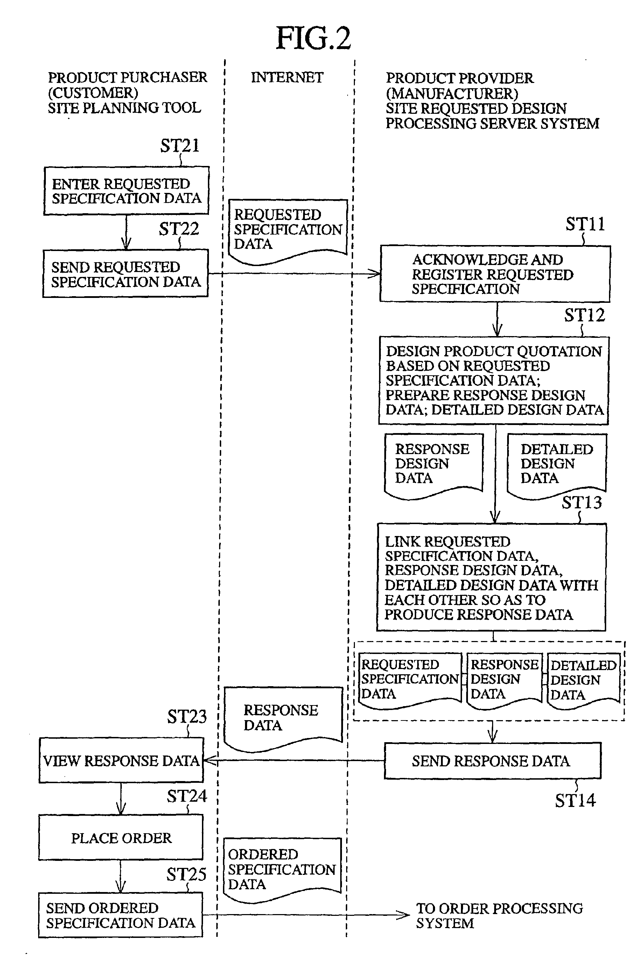

Fig. 2 is a flowchart showing an operation of the facility planning supporting system shown in Fig. 1.

At the purchaser (customer) site, the requested specification data is generated using the requested specification data generating means 22 (ST21). For example, data describing the rating of the facility, the system used, product identification, performance and the like are prepared using numerals and codes. If necessary, a list of load facilities and drawing data such as circuit diagrams and plan views of buildings may be generated. The requested specification data thus generated is sent to the contractor (manufacturer) (ST22).

The requested specification data sent from the purchaser is acknowledged by the requested specification acknowledging and registering means 12, assigned a reference numeral according to a predetermined numbering scheme, and registered in a shared area (ST11). The product quotation designing means 13 refers to the requested specification data registered in the shared area so as to design a product quotation (ST12). More specifically, implementation ratings corresponding to the requested ratings are determined, equipment and components are selected and the layout thereof is determined, technical calculations and analysis using simulations is performed to aid the determinations. The results output as a result of these activities are used to generate the response design data and the detailed design data, which are then registered in the shared area.

The design data linking means 14 monitors the processes performed by the product quotation designing means 13 so as to link the requested specification data, the response design data, the detailed design data with each other, establishing linked relationship between the data (ST13). The links may be established using HTML anchor tags embedded in relevant locations in the respective data. The data with the links embedded is modified so as to be viewable by the web browser before being sent to the purchaser (ST14). The data may be sent using electronic mail, the FTP protocol or the HTTP protocol.

When the contractor returns the response data, the purchaser uses the response data viewing means 23 to view screens related to the response data thus sent (liked requested specification data, response design data and detailed design data) (ST23).

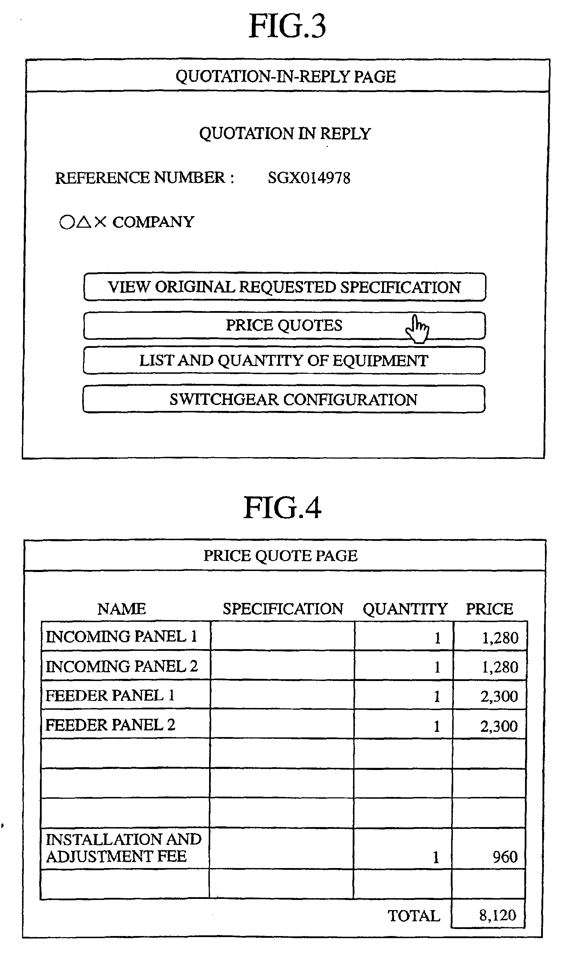

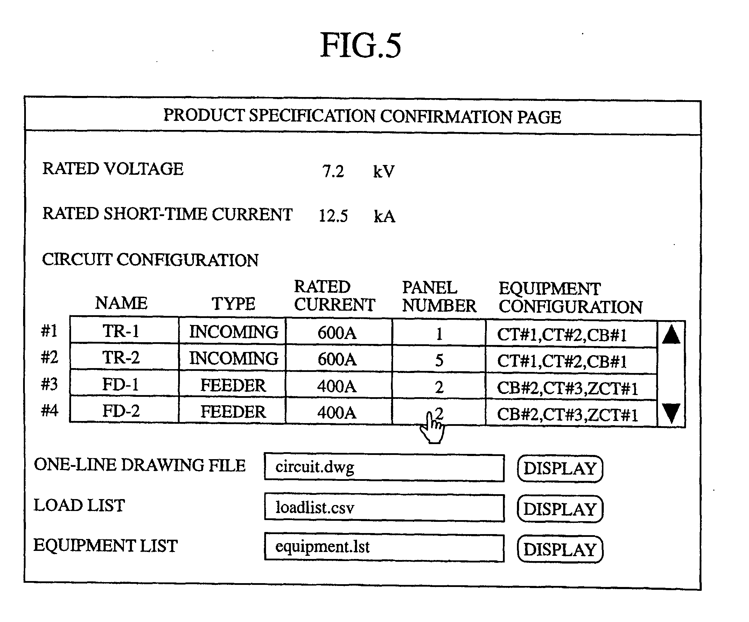

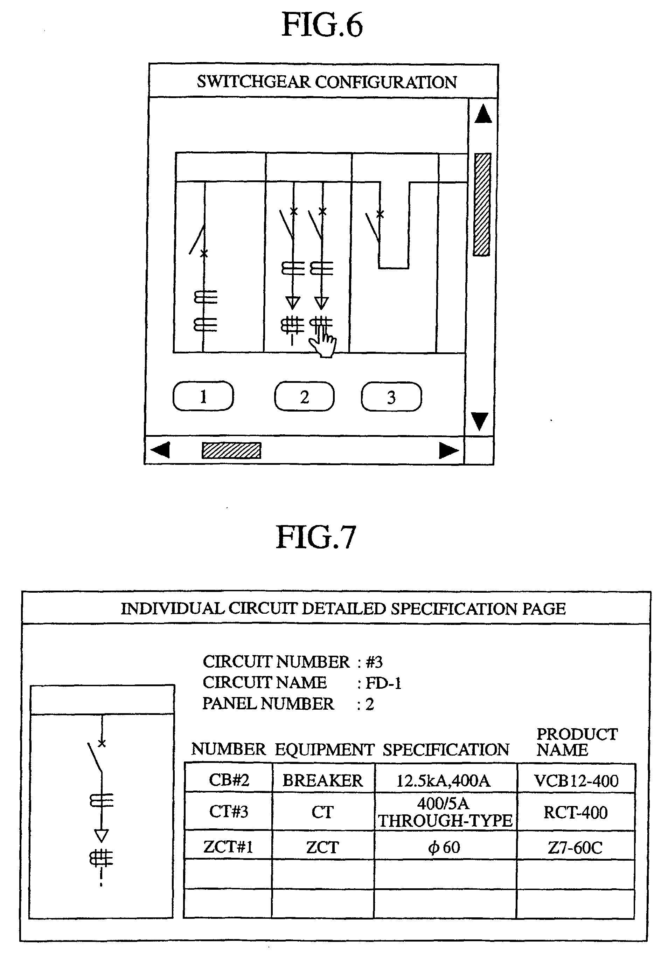

Figs. 3-7 show screens displaying the response data. Fig. 3 shows an initial screen. Fig. 4 shows a screen displaying the response design data corresponding to link information embedded in a price quotation section of the initial screen. Fig. 5 shows a screen displaying the requested specification data corresponding to link information embedded in a "view the original requested specification" section of the initial screen. Fig. 6 shows a screen displaying the response design data corresponding to link information embedded in a section labeled "panel number 2" for circuit configurations #3 and #4 of Fig. 5. Fig. 7 shows a screen displaying the detailed design data corresponding to link information embedded in a predetermined section in the circuit diagram of Fig. 6.

Thus, each item of the requested specification data has information embedded therein linked to a corresponding data item in the response design data. By clicking on the link, the response design data is viewable. Similarly, each item of the response design data has information embedded therein linked to a corresponding data item in the original requested specification. By clicking on the link, the contents of the requested specification that serves as the criteria for design are viewable. Additionally, each item of the response design data has information embedded therein linked to a corresponding data item in the detailed design data. By clicking on the link, the detailed design data is viewable.

The volume of detailed design data is so large that it is preferable to store the detailed design data in the server computer so as to allow the client computer to request the detailed design data at the server computer by calling the detailed design data via the link information embedded in the response design data (requested specification), instead of sending the detailed design data and the response data to the purchaser and storing the detailed design data in the client computer.

By viewing the response data in which links are provided, the purchaser is capable of knowing whether the design plan is adapted for the intention. When the purchaser determines that the response serves the purpose, the order placing means 24 is used to place an order (ST24). By sending the response data or the ordered specification data comprising data for corrections to the contractor, the order for the product is effected (ST25).

According to the first embodiment, the contractor prepares the response design data and the detailed design data corresponding to the requested specification. The contractor supplies the response design data and the detailed design data coupled with the requested specification data to the purchaser. Accordingly, the purchaser is allowed to view the design data on-line. The response design data and the detailed design data corresponding to a desired section of the requested specification data are also viewable. Accordingly, the correspondence between the data is easily identified. Complex steps involving inquiries and answers related to a quotation are significantly simplified so that the time required for designing the quotation is reduced.

### Second embodiment

The first embodiment is configured to allow the purchaser to generate the requested specification data on a voluntary basis. In the second embodiment, the contractor prepares and sends to the purchaser a predetermined requested specification entry form and an associated entry tool. The purchaser generates the requested specification data based on the requested specification entry form.

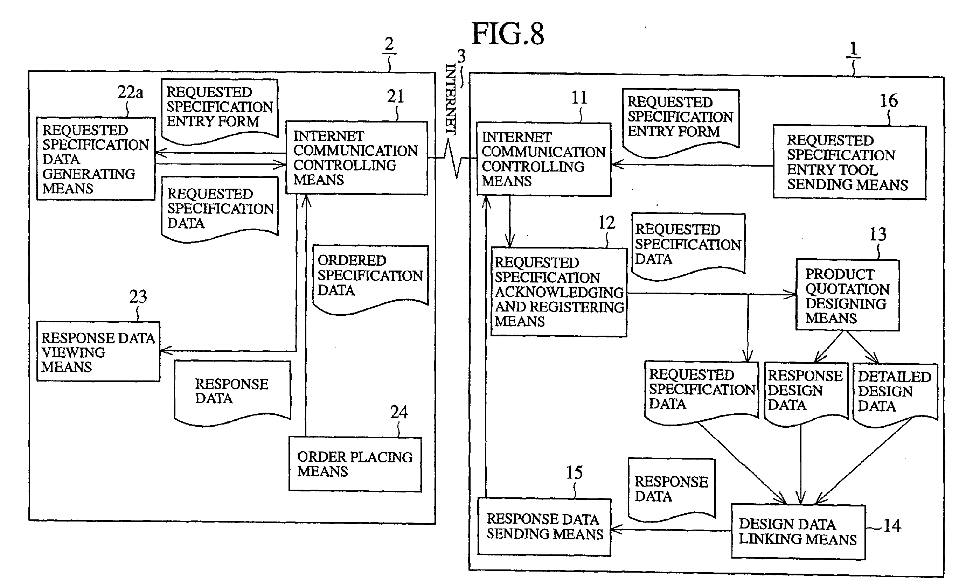

Fig. 8 is a block diagram showing an overall construction of a facility planning supporting system according to the second embodiment. The server computer 1 of Fig. 8 is additionally provided with a requested specification entry tool sending means 16 for sending a requested specification entry tool including the requested specification entry form to the purchaser. The other aspects of the server computer 1 of Fig. 8 are the same as the corresponding aspects of the server computer 1 of Fig. 1. The client computer 2 of Fig. 8 is the same as the client computer 2 of Fig. 1 except that the requested specification generating means 22a of the client computer 2 of Fig. 8 generates the requested specification data using the requested specification data entry tool. The following description concerns the differences from the construction of Fig. 1.

The requested specification entry form provides a template in which the requested specification data is entered. More specifically, items of requirements that serve as references on which to build a design of the target facility are formatted.

The requested specification data entry tool includes the data for the requested specification entry form and is used to help the purchaser to enter the requested specification data using the requested specification entry form. For example, the requested specification data entry tool is provided with the function of displaying an entry form on a screen of the client computer 2 so as to prompt the purchaser (customer) to enter the requested specification, automatically generating circuit diagrams, layout diagrams when the requested specification is entered, and editing the layout or the like in the circuit diagrams and layout diagrams.

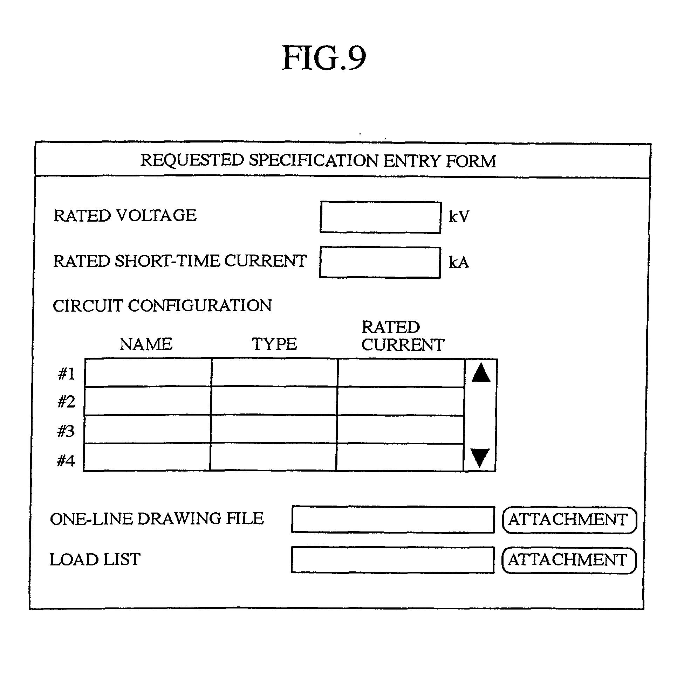

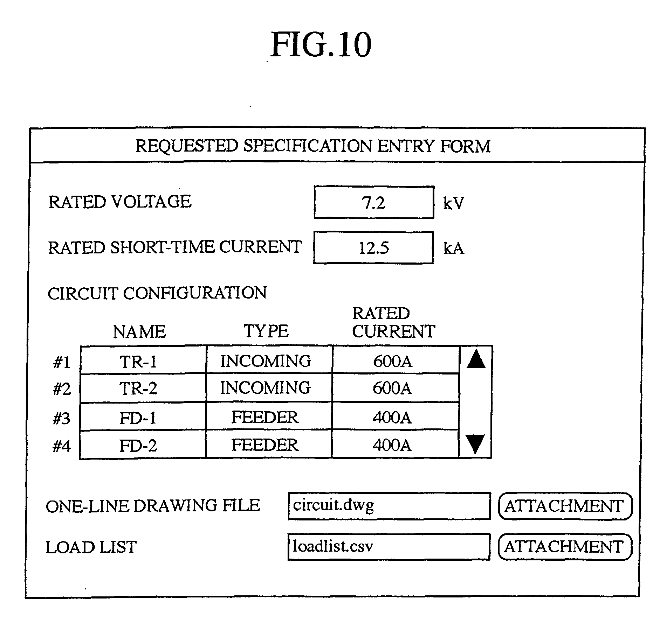

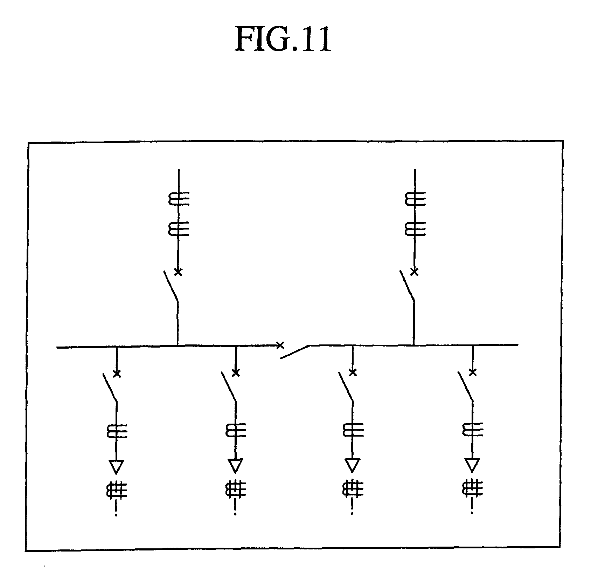

Fig. 9 shows an example of the requested specification entry form. Fig. 10 shows an example of a screen in which predetermined data (requested specification data) is entered in the requested specification entry form of Fig. 9. Fig. 11 shows contents of a file attached to the requested specification entry form of Fig. 10.

According to the second embodiment, the server computer 1 at a site of the contractor sends the requested specification entry form with a predetermined format to the client computer 2 at a site of the contractor so that the requested specification entry form is filled with the requested specification data. Accordingly, the compatibility of data format is maintained between the purchaser and the contractor so that the data is efficiently viewed and corrected.

The second embodiment is configured such that the requested specification data is entered using the requested specification data entry tool sent from the contractor. Alternatively, the requested specification data entry tool (excluding the requested specification entry form) may be provided in the client computer 2 at the site of the purchaser so that the server computer 1 only sends the requested specification entry form.

A description will now be given of the facility planning supporting method according to the second embodiment.

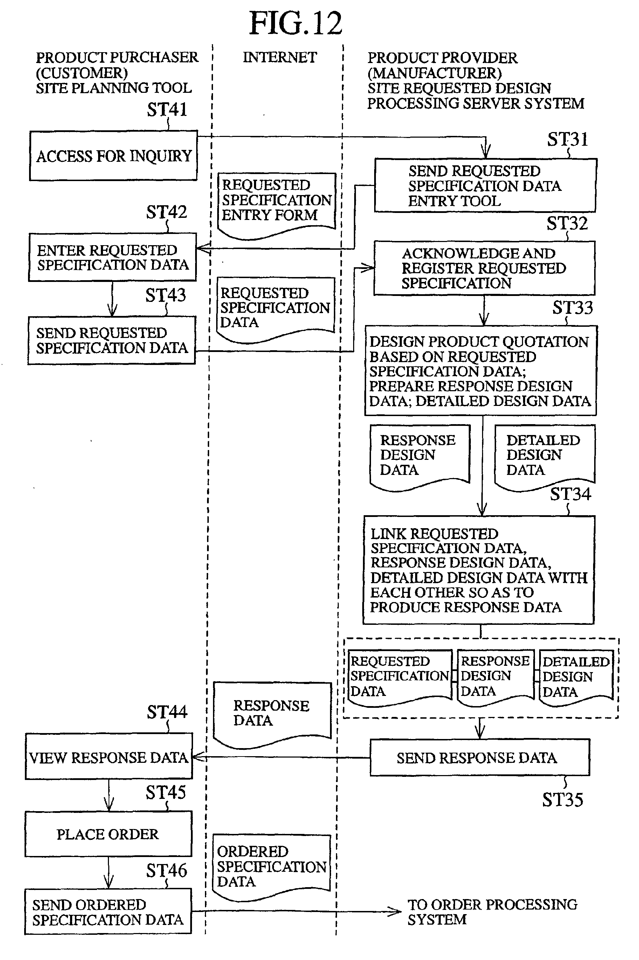

Fig. 12 is a flowchart showing the operation of the facility planning supporting system shown in Fig. 8. Steps ST32-ST35 of Fig. 12 are similar to steps ST11-ST14 of Fig. 2, and steps ST44-ST46 of Fig. 12 are similar to steps ST23-ST25 of Fig. 2 so that the description thereof is omitted.

The purchaser (customer) accesses the system for inquiry (ST41). The access for inquiry may be effected by the purchaser accessing a web page of the contractor with a selection of a form request button.

The contractor detects the access from the purchaser so that the requested specification entry tool sending means 16 sends the requested specification entry tool including the requested specification entry form to the purchaser (ST31).

When the requested specification entry tool is sent from the contractor, the purchaser uses the requested specification data generating means 22a and the requested specification data entry tool to enter data related to the requested specification in the requested specification entry form of a predetermined format. In this way, the requested specification data is generated. The requested specification data entered according to the second embodiment may have the same contents as the requested specification data entered in the first embodiment, the difference being that the entry in the second embodiment is done according to a predetermined format (ST42).

More specifically, the requested specification entry form sent from the server computer 1 is displayed on a screen so as to prompt the user for an input of specification items. The requested specification data is generated by providing entries in form data as shown in Figs. 10 and 11. Specification items describable in numerals, texts and codes, such as the rating of the facility, the system used, product identification, performance, are entered using key inputs or menu selections. Drawing data such as circuit diagrams and plan views of buildings are generated using a custom or general-purpose CAD system as data of a standard CAD data format agreed upon at least between the customer and the manufacturer. The drawing data are then read from a file thus stored and are attached to the form. List data such as that of a list of load facilities are generated as list data of a standard format, such as a CSV format output from a spread sheet program, agreed upon at least between the customer and the manufacturer. The list data are then read from a file thus stored and are attached to the form.

The form data in which the entries of necessary items are completed are sent to the contractor as the requested specification data (ST43).

Steps ST32-ST35 of Fig. 12 are similar to steps ST11-ST14 of Fig. 2, and steps ST44-ST46 of Fig. 12 are similar to steps ST23-ST25 of Fig. 2 so that the description thereof is omitted.

As described above, the contractor prepares and sends to the purchaser the requested specification entry form of a predetermined format and the associated entry tool. The purchaser generates the requested specification data based on the requested specification entry form. Accordingly, the compatibility of data format is maintained between the purchaser and the contractor so that the contents of data is efficiently viewed and corrected.

### Third embodiment

In the second embodiment, an example is given of the use of requested specification entry form of a predetermined format. The third embodiment provides an alternative by storing information related to the past records of projects. The past project that best matches the current project is selected by searching the information related to the past records. The information on the project thus selected is entered as initial values in the requested specification entry form.

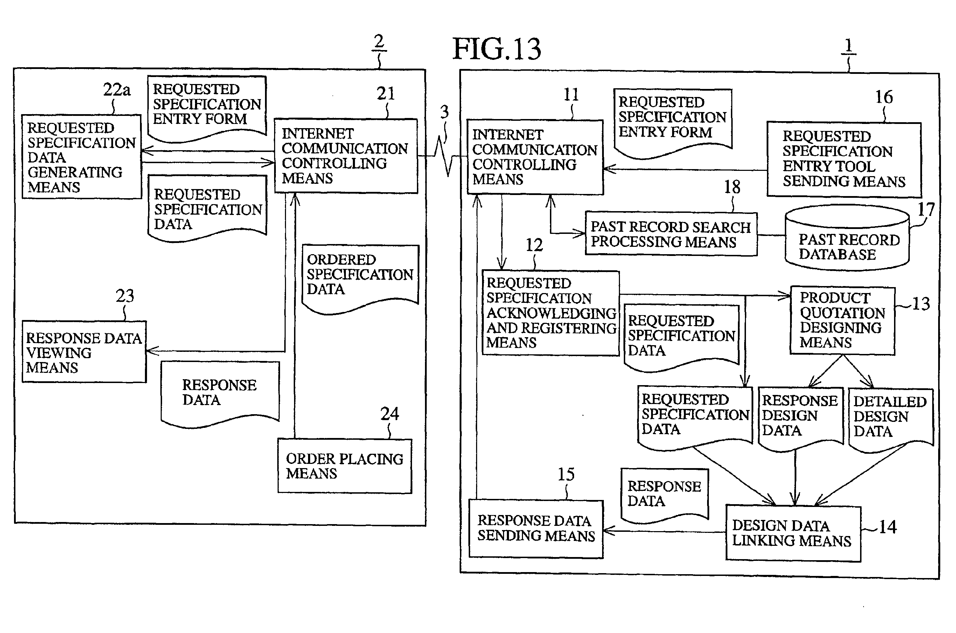

Fig. 13 is a block diagram showing an overall construction of a facility planning supporting system according to the third embodiment. As shown in Fig. 13, the server computer 1 of Fig. 13 is the same as from the server computer 1 of Fig. 8 except that there are provided a past record database 17 storing information related to the past records and a past record search processing means 18 for retrieving desired project information from the past record database 17. Another difference from the facility planning supporting system of Fig. 8 resides in the operation of the requested specification data generating means 22a of the client computer 2. The description below concerns the differences.

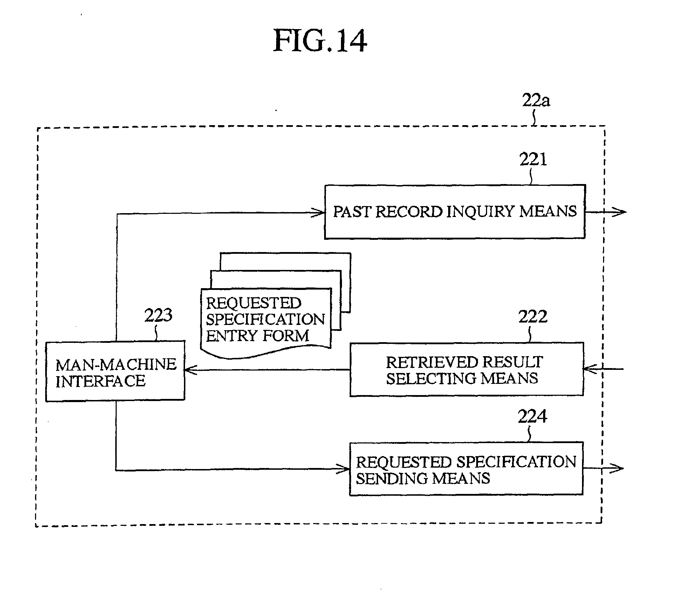

Fig. 14 is a block diagram showing details of the requested specification data generating means 22a of Fig. 13. Referring to Fig. 14, the requested specification data generating means 22a comprises a past record inquiry means 221 for sending contents entered in form data to the server computer 1 at start-up so as to issue a search request to the past record search processing means 18. A search result selecting means 222 displays a list of data related to a group of past projects matching the search request so as to prompt the user for selection and enters the data for the selected project in a form. The search result selecting means displays the form for item-by-item comparison between the contents of the original form data with the contents of the requested specification data of the projects retrieved as a result of the search. The search result selecting means aids the selection by also displaying comments describing features (advantages and disadvantages) of the retrieved past record with reference to the requirements in the current project. A man-machine interface 223 displays the contents of the requested specification entry form, processes menu selections and key inputs relative to items of specification (for example, ratings and product types) describable in numerals, texts or codes so as to enter the items in the form data, creates drawings such as circuit diagrams representing electric circuits of the facility and plan views of premises or buildings in which the facility is being planned, or a list of load facilities planned to be covered by the facility, imports drawing data prepared using an external tool, and displays command menus and buttons for activating the past record inquiry means 221 for searching past records at a desired point of time.

The past record search processing means 18 searches the past record database 17 in accordance with the form data the server computer 1 acknowledged, so as to return the data related to a group of past projects matching the search request according to predetermined standards. The search may be processed as follows.

The past record search processing means 18 calculates item by item a level of match between the contents of the acknowledged form data and the contents of the projects in the past record database 17. For items of specification describable in numerals, texts or codes, the similarity of each of the acknowledged specification item to the corresponding item belonging to the project in the past record database 17 is calculated as a level of match. For electric circuit diagrams, the phase relationship found in the acknowledged data is compared with the corresponding data in the past record based on connections between symbols. The level of match is determined by calculating the degree of being common in structures. For drawings such as plan views of premises and buildings, the level of match is determined by calculation as the similarity between coordinate data group indicating relative positions of main structures.

An evaluation is made by summing products of the level of match thus calculated for each item and a predetermined weight assigning a coefficient defined for each item. A predetermined number of records is retrieved in the decreasing order of the level of match.

As described above, in the second embodiment, the past records for a customer are searched so as to select a desired project that best matches the current project so that the data for the selected record are entered in the requested specification entry form as initial values. Accordingly, the trouble and time required for entries of data for a second time is reduced.

### Fourth embodiment

In the third embodiment, the data for the desired past project that best matches the current project are selected as initial values to be entered in the requested specification entry form. The fourth embodiment provides an alternative by allowing initial values defined based on customer-specific information to be set in the requested specification entry form.

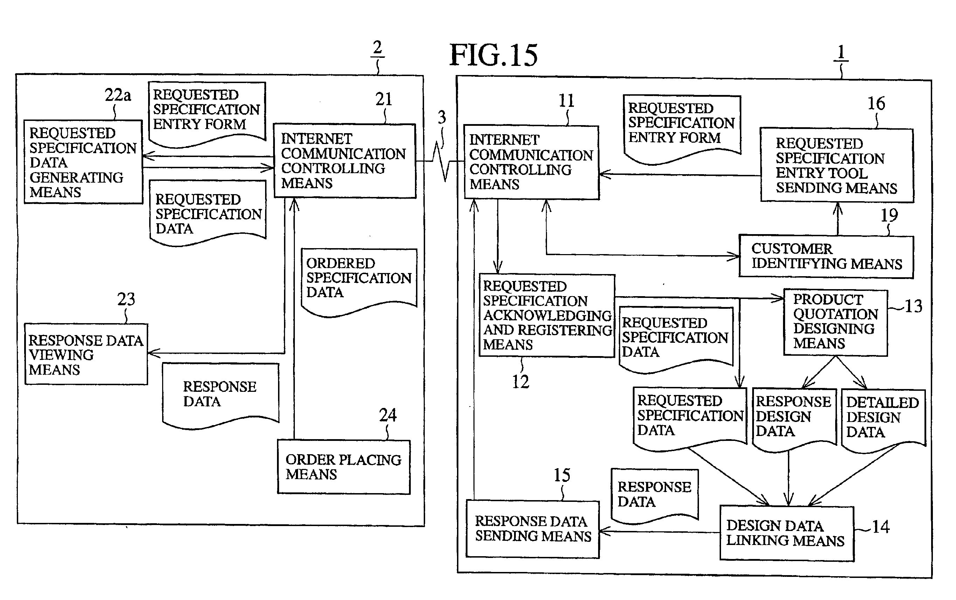

Fig. 15 is a block diagram showing an overall construction of a facility planning supporting system according to the fourth embodiment. As shown in Fig. 15, the server computer 1 is the same as that of Fig. 8 except that there are provided a customer identifying means 19 for identifying customer names, line of business, business category, industry to which the customer belongs in the process of acknowledging an access for inquiry from the customer, and that the requested specification entry tool sending means 16 sets information based on customer-specific information as initial values entered in the requested specification entry form. The description below concerns the differences. The customer identifying means 19 is provided with a customer-password mapping database. When the purchaser accesses the server computer 1 of the contractor, the customer identifying means 19 prompts the purchaser to enter a password or the like. By referring to the customer-password mapping database for a match with the entered information, a determination is made as to whether the accessing purchaser is a registered customer. When the accessing purchaser is found to be registered, a customer number is retrieved.

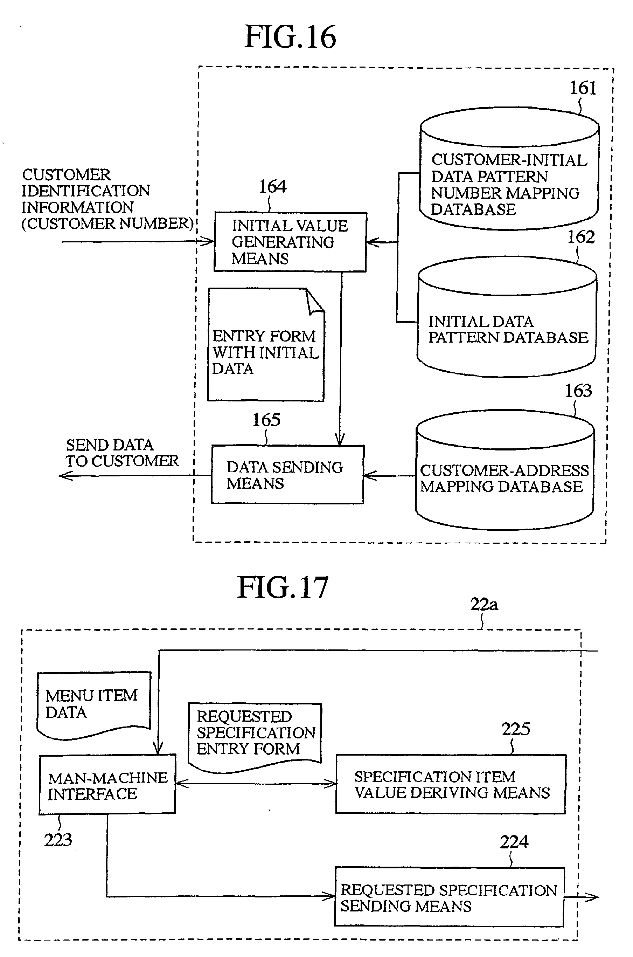

Fig. 16 is a block diagram showing an initial value setting section of the requested specification entry tool sending means 16. Referring to Fig. 16, the requested specification entry tool sending means 16 comprises a customer-initial data pattern number mapping database 161, an initial data pattern database 162 and a customer-address mapping database 163. The requested specification entry tool sending means 16 further comprises an initial value generating means 164 for generating initial values based on the customer-specific information and a data sending means 165 for retrieving the customer address corresponding to the customer number from the customer-address mapping database 163 so as to send the entry form with the initial data to the retrieved address.

A description will now be given of how the requested specification entry tool sending means 16 sets the initial data for each customer.

The initial value preparing means 164 acknowledges the customer number retrieved by the customer identifying means 19 and searches the customer-initial pattern mapping database 161 using the customer number as a key, so as to retrieve an initial data pattern number.

The initial data pattern 162 is used to retrieve an initial data pattern based on the initial data pattern number. The requested specification entry form has the initial data thus retrieved embedded therein and is delivered to the data sending means 165.

The data sending means 165 retrieves the address of the customer by searching the customer-address mapping database using the customer number as a key and sends the entry form with the initial data to the address of the customer.

As a result of the above-described process, the entry form sent to the customer is read by the computer at the customer site. When the customer opens the entry form, the initial data suited to the customer is already registered, facilitating efficient entry in the form.

According to the fourth embodiment, the initial values based on the customer information are set in the requested specification entry form. Therefore, entry forms suitable for the customer are prepared so that the efficiency of quotation design is improved.

### Fifth embodiment

In the fourth embodiment, the initial values are set in the requested specification entry form based on the customer information. The fifth embodiment provides an alternative in which a range of selections of items of the specification and a process of deriving one item from another, which take effect in the process of entering the requested specification data, are dynamically modified in accordance with the needs and proneness of the customer, based on the customer-specific information.

The facility planning supporting system according to the fifth embodiment is the same as the system of Fig. 15 except that the requested specification entry tool sending means maintains and manages templates categorized based on the customer identification information and sends a template based on the customer identification information delivered from the customer identifying means 19. Another difference resides in the operation of the requested specification data generating means 22a of the client computer 2 of Fig. 15. The description below concerns the differences. The initial values based on the customer information may not necessarily be used as in the fourth embodiment.

Fig. 17 is a block diagram showing details of the requested specification data generating means of Fig. 15. Referring to Fig. 17, the requested specification data generating means comprises a man-machine interface 223 for displaying the requested specification entry form and processes user-initiated menu selections and key inputs relative to items of specifications in the form, so as to provide entries in the form data. For items of specification entered by menu selections, selection candidates are obtained from selection list data. The value defined for one item of specification is derived from the value of another item of specification already entered by a specification item value deriving means 225 so as to provide entries in the form data.

The requested specification data generating means further comprises a requested specification sending means 224 for sending the requested specification form in which the requested specification data are entered, and a specification item value deriving means 225 for reading derivation control parameter data and deriving the value of one item of specification from that of another item already entered in the form, in accordance with a calculating formula or program codes described in the derivation control parameter data, so as to provide entries in the form.

In the fifth embodiment, the range of selections of items of specification and a process of deriving one item from another are dynamically modified in accordance with the needs and proneness of the customer, based on the customer identification information. Accordingly, the entry of the requested specification data is simplified and the purchaser is capable of generating the requested specification data easily.

### Sixth embodiment

In the sixth embodiment, predetermined graphics or symbols are attached to predetermined data in the requested specification data. The response data is generated such that equipment corresponding to the graphics and symbols are assigned to the data having the graphics or symbols attached. The facility planning supporting system according to the sixth embodiment is basically the same as the system of Fig. 8 of the second embodiment and the operation thereof is basically the same as the operation shown in Fig. 12. The description below concerns the differences.

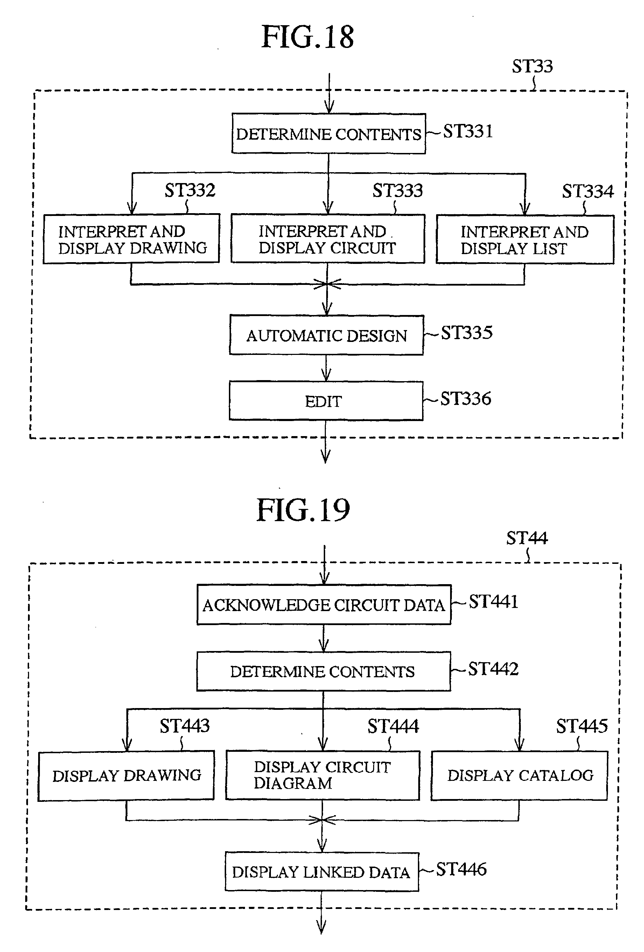

Figs. 18 and 19 are flowchart showing the facility planning supporting method according to the sixth embodiment. Fig. 18 shows details of step ST33 of Fig. 12. Fig. 19 shows details of step ST44 of Fig. 12.

The operation in step ST33 of Fig. 12 is described with reference to Fig. 18.

The contents of the acknowledged requested specification data is analyzed. When it is determined that the data contains circuit diagrams, drawings or lists, the data is delivered for process to respective modules (drawing interpreting and displaying means, circuit diagram interpreting and displaying means, list interpreting and displaying means) (ST331).

The drawing interpreting and displaying means analyzes drawing elements in a layout diagram. When predetermined graphics or symbols are included, the graphics or symbols are retrieved and identified as representing predetermined equipment (ST332). The circuit diagram interpreting and displaying means analyzes drawing elements of the circuit diagrams. When predetermined graphics or symbols are included, the graphics or symbols are retrieved and identified as representing predetermined equipment (ST333). The list interpreting and displaying means determines whether the data conforms to a predetermined specification and converts the data into an internal format (ST334). The results of the processes performed by the above modules are delivered to an automatic designing means for initial design (ST335). When necessary, the contractor may uses an editing function to effect modifications to the initial design.

The operation in step ST44 of Fig. 12 will be described with reference to Fig. 19.

The response data sent from the contractor is received (ST441) and the type of response data received is determined (ST442). More specifically, the response data may be classified into drawings, circuit diagrams, catalogues. The data thus classified is delivered to respective processing means (drawing displaying means, circuit diagram displaying means and catalog displaying means) (ST443-ST445).

Each processing means displays the response data. When a displayed element having a link is selected, the type of data linked is identified and the data is displayed (ST446).

In the sixth embodiment, predetermined graphics or symbols are attached to predetermined data in the requested specification data. The response data is generated such that equipment corresponding to the graphics and symbols are assigned to the data having the graphics or symbols attached. Accordingly, the equipment corresponding to the graphics or symbols is easily referred to so that the inspection of the response data is facilitated.

### Seventh embodiment

In the seventh embodiment, the requested specification data generating means maintains reference data linked with predetermined sections of a screen displayed by the requested specification entry form. Technical calculations associated with the reference data are performed so that the results of the calculations are linked, as a part of the requested specification data, with another part of the requested specification data.

The aspects of the system according to the seventh embodiment other than the reference to the reference data using the requested specification entry form and the provisions for technical calculations are the same as the corresponding aspects of the first through sixth embodiments so that the description below concerns the differences.

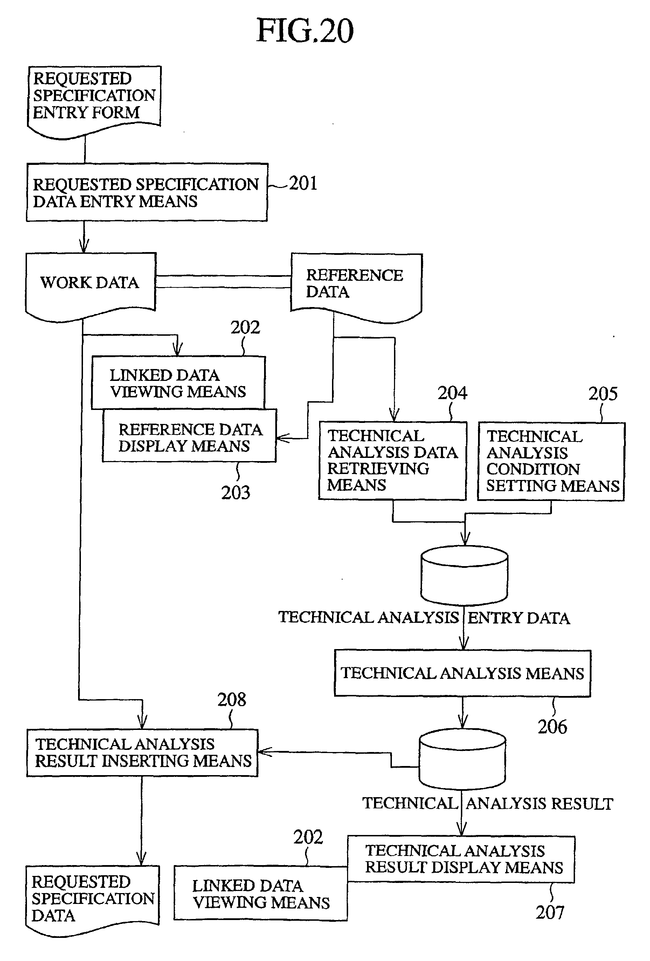

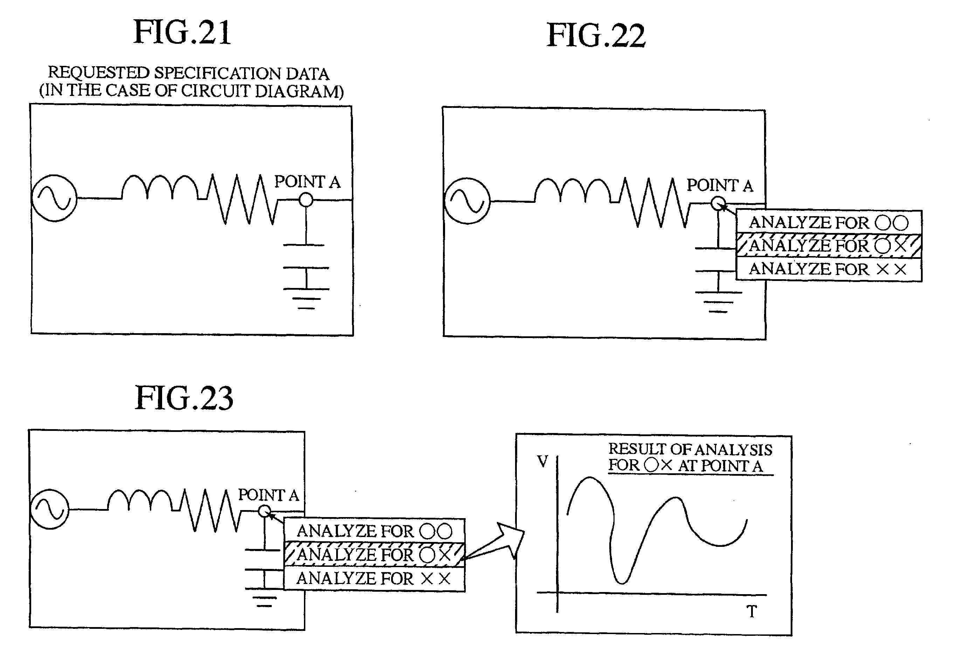

Fig. 20 is a flowchart showing the operation of the requested specification entry form according to the seventh embodiment. Fig. 21 shows a screen in which a circuit diagram as work data is displayed. Fig. 22 shows a screen in which reference data linked with the work data is displayed. Fig. 23 shows analysis results given as a result of analysis based on the reference data.

As shown in Fig. 20, using a requested specification data entry means 201, data in which some components are linked with the reference data are input as work data. A linked data viewing means 202 displays, for example, the work data as shown in Fig. 21. As shown in Fig. 22, when a linked section is selected by a mouse, a reference data display means 203 retrieves the reference data linked with the target component of the input work data. The contents of the reference data is thus displayed.

A technical analysis data retrieving means 204 searches the reference data for information necessary for analysis using an information tag as a search key. The information used for analysis thus obtained is stored at a predetermined section in data entered for technical analysis. A technical analysis condition setting means 205 prompts the user for entry of conditions not described in the reference data but necessary for executing the target analysis. The entered data is stored at a predetermined section in data entered for technical analysis.

When the technical analysis data retrieving means 204 and the technical analysis condition setting means 205 complete the entry of predetermined data, a technical analysis means 206 reads the data entered for technical analysis so as to execute the technical analysis. The technical analysis means 206 stores the result of technical analysis. As shown in Fig. 23, a technical analysis result display means 207 displays the result of technical analysis for the user in the form of numerals, graphs and drawings.

When storing the data, a technical analysis result inserting means 208 links the result of technical analysis with the entirety of data or analyzed sections thereof. By providing the links as described above, it is possible to view the contents of completed analysis while viewing the requested specification data.

In the seventh embodiment, a description is given above of technical calculations based on the reference data. Alternatively, a search in a table or a database may be made based on the reference data or a selection of components may be made based on the reference data so that the result of the search or the selection of the components is linked with the work data.

By performing technical calculations based on the reference data so that the result therefrom is associated with the work data, the purchaser is capable of generating the requested specification data easily. Accordingly, the requested specification data adapted for the intention of the purchaser and reducible to an actual design plan without difficulty may be generated.

### Eighth embodiment

The eighth embodiment introduces a design plan evaluating means and a design plan difference retrieving means so that a plurality of design plans related to each other are displayed simultaneously.

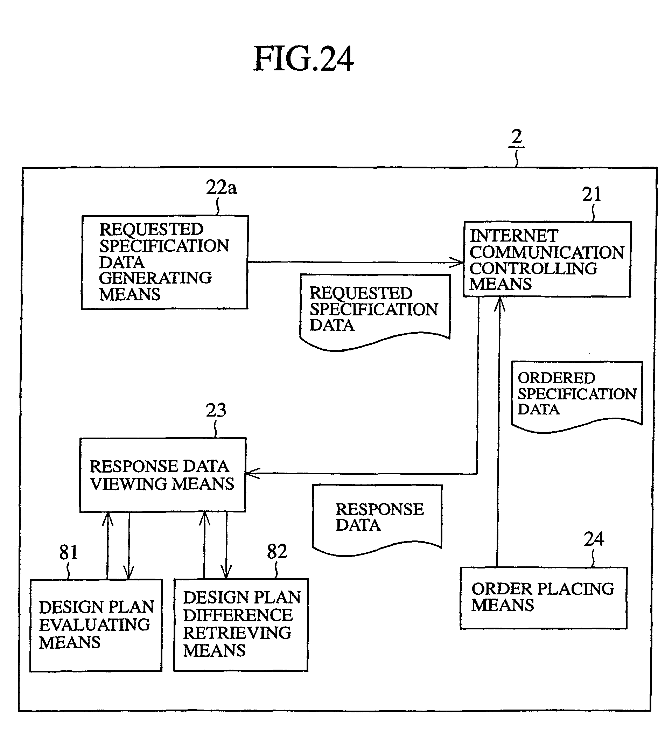

Fig. 24 shows the client computer 2 of a facility planning supporting system according to the eighth embodiment. As shown in Fig. 24, the client computer 2 of the eighth embodiment is the same as that of Fig. 8 of the second embodiment except that there are provided the design plan evaluating means 81 and the design plan difference retrieving means 82. The description below concerns the differences. The design plan evaluating means 81 and the design plan difference retrieving means 82 are provided in the client computer 2 in the eighth embodiment. Alternatively, these means may be provided in the server computer 1 so that design plan evaluation and design plan difference retrieval may be performed by accessing the server computer 1 from the client computer 2.

A description thereof will now be given of a method of generating the requested specification data.

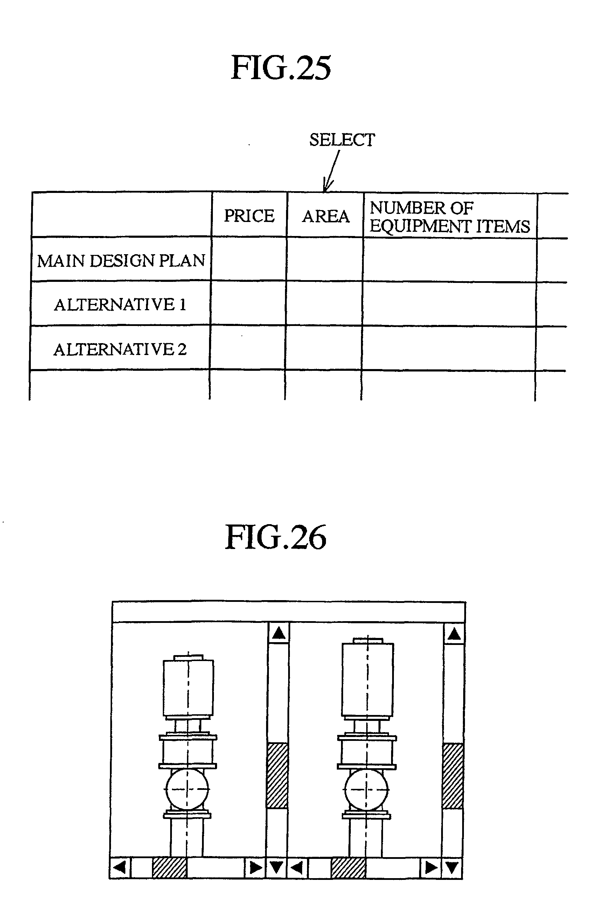

The response data viewing means 23 displays character data and drawing data constituting the response data sent from the contractor for a main design plan. In addition, the response data viewing means 23 delivers the response design data and the detailed design data to the design plan evaluating means 81 to display for comparison the main design plan and the alternative plans. The design plan evaluating means 81 determines by calculation a group of evaluative values for the design plans and displays the evaluative values. Fig. 25 shows a screen showing the evaluative values for the design plans.

When an evaluative value in the view is selected, the design plan difference retrieving means 82 displays a plurality of design plans simultaneously, with differences in the selected evaluation criteria being highlighted using the difference information on the design plans. Thus, the purchaser is prompted for comparative review of the plurality of design plans. Fig. 26 shows a screen displaying a plurality of design plans with the differences being highlighted.

As described, according to the eighth embodiment, evaluative values for a plurality of design plans are displayed. Differences are highlighted when necessary. Accordingly, comparative review of a plurality of design plans is easy so that inspection of the response design data is facilitated.

### Ninth embodiment

In the ninth embodiment, it is ensured that, when marked-up target data input to the response data viewing means is linked with other data, the data at the destination of the link is also marked up.

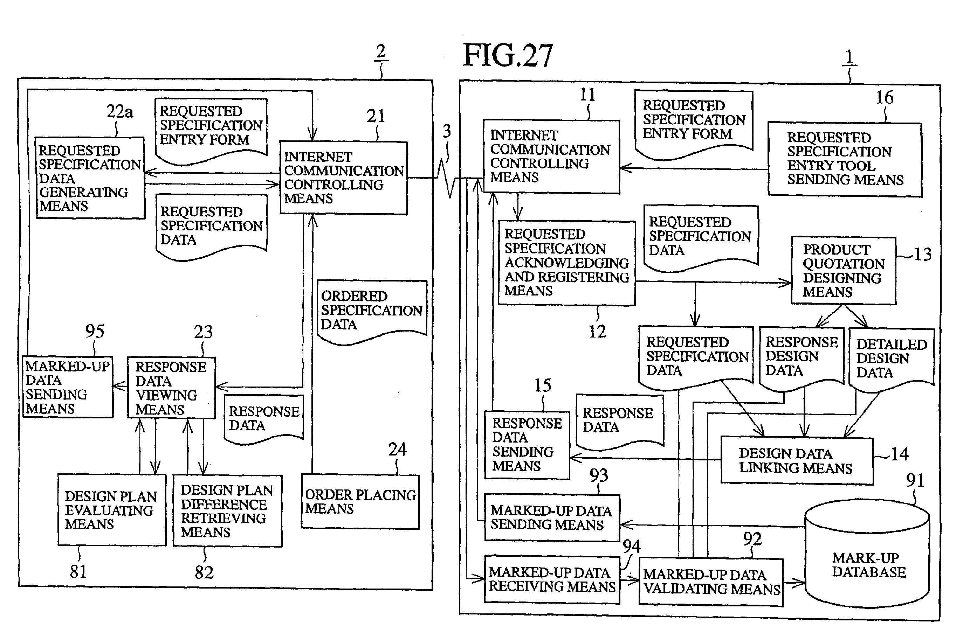

Fig. 27 shows an overall construction of a facility planning supporting system according to the ninth embodiment. As shown in Fig. 27, the server computer 1 is provided with a mark-up database 91, a mark-up data validating means 92, a mark-up data sending means 93 and a mark-up data receiving means 94. The client computer 2 is provided with a mark-up data sending means 95. The other aspects of the system of the ninth embodiment are the same as the corresponding aspects according to the eighth embodiment so that the description below concerns the differences.

The mark-up data validating means 92 provided in the server computer 1 generates mark-up data for the data linked to the data input to the response data viewing means 23 and marked up by the viewer. The response data viewing means 23 is provided with the function of allowing the viewer to input mark-up data for character data and drawing data displayed for view.

A description will now be given of a method of linking the data input to the response data viewing means and marked up by the viewer, with other data.

When the response data viewing means 23 is used to attach mark-up data to a target object (displayed character or drawing data), the mark-up data attached to the target object is sent from the mark-up data sending means 95 at the purchaser site to the mark-up data receiving means 94 at the contractor site and delivered to the mark-up data validating means 92.

The mark-up data validating means 92 searches the requested specification data, the response design data and the detailed design data for the data having the mark-up data attached. When it is determined that the marked-up data is linked with other data, the mark-up data validating means 92 marks the data at the destination of the link and registers the mark-up data in the mark-up database 91. With this, sections of the response data corresponding to sections of the requested specification data that is marked up are automatically marked up. Accordingly, the correspondence between the highlighted sections of the requested specification data and the highlighted sections of the response data is recognized at a glance, thus enabling the viewer to learn the correspondence between the requested specification data and the response data more properly.

### INDUSTRIAL APPLICABILITY

As described above, the facility planning supporting method and system according to the present invention is suitable for support of quotation design in which a project scale is larger and the volume of activities involved in designing a quotation is large. For example, the invention finds a best application in designing a quotation for facilities for electric power transformation, reception and distribution.

## Claims

1. A facility planning supporting method in which a contractor generates design plan data based on requested specification data generated by a purchaser and provides the design plan data thus generated to the purchaser via a communications medium, comprising the steps of:
providing, at a site of the contractor, links between the design plan data and the requested specification data so that the design plan data and the requested specification data are viewable one from the other; and
providing, at the site of the contractor, the design plan data and the requested specification data thus linked with each other to the purchaser.

2. The facility planning supporting method according to claim 1, wherein the requested specification data is data entered in a predetermined requested specification data entry form sent from the contractor to the purchaser.

3. The facility planning supporting method according to claim 2, further comprising the steps of:
storing a past record of projects at the site of the contractor;
retrieving projects similar to a current project from the past record of projects; and
providing the requested specification entry form adapted for the retrieved project to the purchaser.

4. The facility planning supporting method according to claim 2, wherein the contractor provides the requested specification entry form adapted for each of a plurality of purchasers to the respective purchaser.

5. The facility planning supporting method according to claim 2, wherein the contractor sends to the purchaser a requested specification entry tool that allows entry of character data, drawing data and circuit data in the requested specification entry form.

6. The facility planning supporting method according to claim 5, wherein the requested specification entry tool displays an entry form screen presenting reference data linked with the entry form so that desired data selected from the reference data is entered.

7. The facility planning supporting method according to claim 6, wherein technical calculations, necessary table searches, or selections of components for building the facility for fixing an item of specification are performed, based on the reference data so that a result of the technical calculations, the table search and the selection is included in the requested specification data.

8. The facility planning supporting method according to claim 1, wherein, when mark-up data for highlighting a first object is included in the requested specification data, mark-up data is also attached to a second object in the corresponding design plan data linked with the first object.

9. The facility planning supporting method according to claim 1, wherein the requested specification data includes information defined to correspond to predetermined data so that the design plan data is generated based on the information.

10. A facility planning supporting method in which a contractor generates design plan data based on requested specification data generated by a purchaser and provides the design plan data thus generated to the purchaser via a communications medium, comprising the steps of:
viewing, at a site of the purchaser, the requested specification data and the design plan data linked with each other by the contractor so that the design plan data and the requested specification data are viewable one from the other; and
sending, from the site of the purchaser, order data to the contractor based on the requested specification data and the design plan data.

11. The facility planning supporting method according to claim 10, wherein the requested specification data including character data, drawing data and circuit data are sent to the contractor.

12. The facility planning supporting method according to claim 11, wherein an entry form screen presenting reference data linked with the entry form is displayed so that desired data selected from the reference data is entered to complete the requested specification data.

13. The facility planning supporting method according to claim 12, wherein technical calculations, necessary table searches, or selections of components for building the facility for fixing an item of specification are performed, based on the reference data so that a result of the technical calculations, the table search and the selection is included in the requested specification data.

14. The facility planning supporting method according to claim 10, wherein the design plan data is data related to a plurality of design plans including alternatives so the design plans are viewable by the purchaser for comparison.

15. A server computer for a facility planning supporting system for generating, at a site of a purchaser, design plan data based on requested specification data, and providing the design plan data thus generated to a purchaser via a communications medium, comprising:
requested specification data acknowledging means acknowledging and storing requested specification data sent from a purchaser;
designing means generating a design plan based on the requested specification data;
design data linking means linking the design plan and the requested specification data with each other so that the requested specification data and the design data are viewable one from the other; and
response data providing means providing the requested specification data and the design plan data linked to each other to the purchaser.

16. A client computer for a facility planning supporting system for generating requested specification data and sending the requested specification data to a contractor, viewing design plan data generated at a site of the contractor based on the requested specification data, and placing an order with the contractor, comprising:
requested specification data generating means generating the requested specification data sending the requested specification data to a purchaser;
viewing means receiving the design plan data and the requested specification data linked with each other such that the design plan data and the requested specification data are viewable one from the other; and
order placing means sending order data to the contractor based on the requested specification data and the design plan data viewed using said viewing means.
